# EUROPÄISCHE PATENTANMELDUNG

(11) **EP 2 228 118 A1**
(43) Veröffentlichungstag der Anmeldung: **15.09.2010**
(21) Anmeldenummer: 10153908.8
(22) Anmeldetag: 18.02.2010
(51) Int. Cl.: B01D 53/14, B01D 53/62, B01D 53/78, B01F 17/00, F23J 15/04

(54) **Absorberflüssigkeit, Verfahren zur Herstellung einer Absorberflüssigkeit sowie Verwendung einer Absorberflüssigkeit**

(30) Priorität: 25.02.2009 DE 102009010535
(71) Anmelder: SIEMENS AKTIENGESELLSCHAFT, 80333 München (DE)
(72) Erfinder: Joh, Ralph, Dr., 63500 Seligenstadt (DE); Schneider, Rüdiger, Dr., 65817 Eppstein (DE)

(57) **Zusammenfassung**

Die Erfindung betrifft eine Absorberflüssigkeit, insbesondere zur Abscheidung von Kohlendioxid aus dem Rauchgas einer fossil befeuerten Verbrennungseinrichtung. Die Absorberflüssigkeit umfasst ein Absorptionsmittel, vorzugsweise in einem Zweikomponentengemisch mit einer freien Aminosäure und einem Aminosäuresalz. Der Absorberflüssigkeit ist ein oberflächenaktiver Zusatzstoff, vorzugsweise ein Tensid, zugesetzt. Die oberflächenspannungsreduzierenden Eigenschaften des Zusatzstoffes führen zu einer größeren Stoffaustausch-Wechselwirkungsfläche, so dass eine effizientere CO₂-Abscheidung erreicht ist. Die Erfindung betrifft weiterhin ein Verfahren zu Herstellung einer Absorberflüssigkeit sowie eine Verwendung der Absorberflüssigkeit, insbesondere zur Abscheidung von Kohlendioxid aus Kraftwerksanlagen.

## Beschreibung

Die Erfindung betrifft eine Absorberflüssigkeit, insbesondere für die selektive Absorption von Kohlendioxid aus dem Rauchgas einer Verbrennungsanlage. Die Erfindung betrifft weiterhin ein Verfahren zur Herstellung einer Absorberflüssigkeit sowie eine Verwendung.

Bei fossil befeuerten Kraftwerksanlagen zur Erzeugung elektrischer Energie in großtechnischem Maßstab entsteht durch die Verbrennung eines fossilen Brennstoffs ein kohlendioxidhaltiges Abgas. Neben Kohlendioxid enthält das Abgas weitere Verbrennungsprodukte, wie z.B. die Gase Stickstoff, Schwefeldioxid, Stickstoffoxid und Wasserdampf sowie Festkörperpartikel, Stäube und Ruß. Das Abgas wird nach einer weitgehenden Abscheidung der Festkörperbestandteile in die Atmosphäre entlassen. Das sich in der Atmosphäre ansammelnde Kohlendioxid behindert die Wärmeabstrahlung unserer Erde und begünstigt durch den sogenannten Treibhauseffekt eine Erhöhung der Erdoberflächentemperatur.

Um eine Reduzierung der Kohlendioxidemissionen bei fossil befeuerten Kraftwerksanlagen zu erreichen, kann Kohlendioxid aus dem Abgas abgetrennt werden.

Zur Abtrennung von Kohlendioxid aus einem Gasgemisch sind insbesondere aus der chemischen Industrie verschiedene Methoden bekannt. Insbesondere zum Trennen von Kohlendioxid aus dem Abgas nach einem Verbrennungsprozess (Post Combustion CO₂-Separation) ist die Methode der "Absorption-Desorption" oder der Tieftemperaturabscheidung ("Cryogenic") bekannt.

In großtechnischem Maßstab wird das beschriebene Abtrennen von Kohlendioxid mit dem Absorptions-Desorptionsverfahren mit einem Waschmittel durchgeführt. Mit einem klassischen Absorptions-Desorptionsprozess wird das Abgas in einer Absorptionskolonne mit einem selektiven Lösungsmittel als Waschmittel in Kontakt gebracht, dabei erfolgt die Aufnahme von Kohlendioxid durch einen chemischen oder physikalischen Prozess.

Das mit Kohlendioxid beladene Lösungsmittel wird zur Abtrennung des Kohlendioxids und Regenerierung des Lösungsmittels in eine Desorptionskolonne geleitet, die Abtrennung in der Desorptionskolonne kann thermisch erfolgen. Dabei wird aus dem beladenen Lösungsmittel ein Gas-Dampfgemisch aus gasförmigen Kohlendioxid und verdampftem Lösungsmittel bzw. Lösungsmittelbestandteilen ausgetrieben. Die verdampften Lösungsmittelanteile werden anschließend von dem gasförmigen Kohlendioxid durch Kondensation separiert. Das Kohlendioxid kann nun in mehreren Stufen verdichtet, gekühlt und verflüssigt werden. In flüssigem oder gefrorenem Zustand kann das Kohlendioxid dann einer Lagerung oder Verwertung zugeführt werden. Das regenerierte Lösungsmittel wird der Absorberkolonne zurückgeleitet, wo es wiederum Kohlendioxid aus dem kohlendioxidhaltigen Abgas aufnehmen kann.

Ein Hauptproblem bei den existierenden Verfahren zum Abtrennen von Kohlendioxid aus einem Gasgemisch ist insbesondere der sehr hohe Energieaufwand der in Form von Heizenergie für die Desorption benötigt wird. Um diesem Problem entgegenzuwirken sind aus dem Stand der Technik eine Reihe von Vorschlägen bekannt.

In zunehmendem Maße sind gesetzliche Vorschriften zu erwarten, die in Richtung einer Reduktion der Treibhausgase, insbesondere des Kohlendioxid aus allen möglichen Quellen abziehen. Kohlendioxid fällt als klimawirksames Gas als Bestandteil des Rauchgases fossil befeuerter Kraftwerke zur Elektrizitätserzeugung an. Zur Vermeidung bzw. Verringerung entsprechender Emissionen muss Kohlendioxid abgetrennt werden. In großtechnischem Maßstab ist diese Abtrennung heute praktisch nur mit einem kombinierten Verfahren aus Absorption und Desorption technisch möglich.

Die Absorption und Desorption erfolgt in der Regel in einer Wasch- und einer Desorptionskolonne, in der durch geeignete Einbauten eine möglichst hohe Stoffaustauschfläche bei möglichst geringem Druckverlust erreicht wird. Die durch die Einbauten geschaffene Stoffaustauschfläche kann jedoch nur dann effektiv ausgenutzt werden, wenn das verwendete Material von der eingesetzten Waschflüssigkeit möglichst vollständig benetzt wird. Gebräuchliche chemische Absorptionsmittel bestehen in der Regel aus wässrigen Lösungen, die oft eine hohe Oberflächenspannung aufweisen, wodurch eine gute Benetzung erschwert wird und die Effizienz der Einbauten in der Desorptionskolonne (Packungen) auf bis zu 50% absinkt. Daher muss heutzutage bei Gaswäschen mit wässrigen Solvent bei der Planung entsprechend mehr Stoffaustauschpackung eingesetzt werden, was zu deutlich größeren Kolonnen mit entsprechend mehr Investitionskosten führt.

Bei der Apparatedimensionierung wird die geringere Benetzbarkeit von strukturierten Packungen oder Füllkörpern aus Kunststoff oder Metall bei wässrigen Systemen derart berücksichtigt, dass man von einer um den Faktor 1,5 bis 2 geringeren Trennleistung ausgeht und entsprechend höhere Betten oder Schüttungen vorsieht" um auf die gewünschte Abscheiderate zu kommen. Keramische Materialien werden in wässrigen Systemen aufgrund ihrer Porosität und Oberflächenpolarität besser benetzt als Metall oder Kunststoff. Der Nachteil von keramischen Einbauten ist jedoch, dass das Material sehr schwer ist bzw. mechanisch nicht besonders stabil und daher nur vergleichsweise wenig Oberfläche pro Volumen realisiert werden kann. Daher wird dieses Material wenn überhaupt in der Regel nur wegen seiner Korrosionsbeständigkeit eingesetzt.

Eine Aufgabe der Erfindung ist es daher eine Absorberflüssigkeit bereitzustellen, mit der gegenüber den bisher bekannten Absorberflüssigkeiten eine möglichst hohe Stoffaustauschfläche bei möglichst geringem Druckverlust erreicht wird. Eine weitere Aufgabe der Erfindung besteht in der Angabe eines Herstellverfahrens zur Herstellung der Absorberflüssigkeit. Eine weitere Aufgabe besteht in der Angabe einer Verwendung.

Die auf eine Absorberflüssigkeit gerichtete Aufgabe der Erfindung wird erfindungsgemäß gelöst durch eine Absorberflüssigkeit, insbesondere für die selektive Absorption von Kohlendioxid aus dem Rauchgas einer Verbrennungsanlage, enthaltend ein Absorptionsmittel und einen grenzflächenaktiven Zusatzstoff zur Herabsetzung der Grenzflächenspannung zwischen einer festen Oberfläche und der Flüssigkeit.

Die Erfindung geht dabei von der Erkenntnis aus, dass eine wesentliche physikalische Größe, die die Benetzung einer Oberfläche bestimmt, die Oberflächenspannung ist. Wasser und wässrige Lösungen zeigen aufgrund der starken Wasserstoffbrückenbindungen eine sehr hohe Oberflächenspannung. Durch den Zusatz eines grenzflächenaktiven Zusatzstoffes zur Herabsetzung der Grenzflächenspannung zwischen der festen Oberfläche und der Flüssigkeit kann die Oberflächenspannung deutlich herabgesetzt und dadurch eine gute Benetzung auch von Trenneinbauten in einer Absorption- oder Desorptionskolonne aus Metall oder Kunststoff erreicht werden. Durch den grenzflächenaktiven Zusatzstoff in der Absorberflüssigkeit werden Trenneinbauten wie Packungen oder Füllkörper aus Metall oder Kunststoff besser benetzt, was zu einem besseren Stoffaustausch und zu einer höheren Trennleistung führt. Daher kann die notwendige Höhe einer Absorptions- oder Desorptionskolonne verringert werden und somit die Investitionskosten verringert werden.

Als Stoffaustausch oder Stoffübergang werden dabei Diffusionsprozesse über eine Grenzfläche hinweg bezeichnet. Die Grenzfläche kann eine Phasengrenze oder eine Membran (Membrankontaktor) sein. Der Stoffübergang ist abhängig vom treibenden Gefälle, den Diffusionsstrecken, der Phasengrenzfläche, der Kontakt- bzw. Verweilzeit und den physikalischen Eigenschaften der Gas- und Flüssigphase wie z.B. deren Viskosität. In Stoffübergangsapparate, wie Kolonnen, ist man bestrebt, mit Hilfe entsprechender Einbauten die Stoffaustauschfläche zu realisieren, die so groß wie möglich ist. Nur so können auch noch kleine treibende Gefälle genutzt werden und kurze Verweilzeiten realisiert werden. Apparativ wird diese Vorgehensweise in der Regel durch einen steigenden Druckverlust limitiert, der bei sehr dichten Packungen und Füllkörperschüttungen resultiert.

Mit der Absorberflüssigkeit gemäß der Erfindung werden die bekannten Nachteile aus dem Stand der Technik überwunden, so dass die bisher vorzunehmende Überdimensionierung der Stoffaustauschapparate entfällt, da eine gute Benetzbarkeit bereits durch die Absorberflüssigkeit erreicht wird. Der grenzflächenaktive Zusatzstoff setzt die Oberflächenspannung herab. Der Effekt dieses Zusatzstoffes kann durch einen der Oberflächenspannung entgegengesetzten Lateraldruck beschrieben werden. Dieser Druck ist strenggenommen kein Druck sondern hat dieselbe Einheit wie die Oberflächenspannung selbst.

In besonders bevorzugter Ausgestaltung der Absorberflüssigkeit hat der Zusatzstoff in seiner chemischen Struktur einen hydrophoben Kohlenwasserstoffrest und einen hydrophilen Molekülteil, so dass die Grenzflächenspannung zwischen fester und flüssiger Phase herabgesetzt wird.

Durch diesen molekularen Aufbau, den man auch als amphiphil bezeichnet wird eine Herabsetzung der Oberflächenspannung erreicht. Gibt man diese Substanz beispielsweise in Wasser, so ordnen sich die einzelnen Moleküle ab einer kritischen Konzentration und bilden innerhalb des Wassers sogenannte Mizellen. Dabei richten sich die Moleküle so aus, dass die hydrophoben Enden sich im Inneren der der Mizelle sammeln und die hydrophilen Enden sich in Richtung der Wassersphase anordnen. Bei hohen Konzentrationen des Zusatzstoffs in der Flüssigkeit können sich auch wurmartige, worm-like zu Mizellen oder auch Doppelschichten von Substanzmolekülen bilden, die Wasser einkapseln. Mit dem so ausgebildeten Zusatzstoff ist ein Netzmittel gegeben, davorliegend das Ziel des Einsatzes des Zusatzstoffs nicht die Vermischung zweier Phasen ist, sondern die Herabsetzung der Grenzflächenspannung zwischen einer festen Oberfläche und einer Flüssigkeit. Statt Tropfen zu bilden, werden die Einbauten der Kolonne mit einem dünnen Film benetzt. Somit wird erreicht, dass in Absorptions- und Desorberkolonnen einer Kohlendioxidabscheideeinrichtung bei Einsatz des Zusatzstoffes als Netzmittel die effektive Stoffaustauschoberfläche erhöht wird.

In bevorzugter Ausgestaltung ist der Zusatzstoff eine Substanz aus der Gruppe der Tenside, mit der die Flüssigkeit versetzt ist. Tenside sind Substanzen, die die Oberflächenspannung einer Flüssigkeit oder die Grenzflächenspannung zwischen zwei Phasen herabsetzen und die Bildung von Dispersion ermöglichen oder unterstützen. Somit eignen sich Tenside als Zusatzstoff in der Absorberflüssigkeit, um als Netzmittel für eine gute Benetzung der Einbauten zu fungieren. Dabei kann als Zusatzstoff ein ionisches Tensid, insbesondere ein anionisches oder ein kationisches Tensid zum Einsatz kommt. Alle Tenside sind aus einem unpolaren und polaren Teil (funktionelle Gruppen) aufgebaut. Als unpolarer Teil dient immer eine sogenannte Alkylgruppe. Der polare Teil kann verschieden aufgebaut sein und ist bei einem nichtionischen Tensid beispielsweise eine OH-Gruppe (Alkohol oder auch Zuckermoleküle) und bei anionischen Tensiden (beispielsweise Carboxylat, Sulfonat oder Sulfat.

In besonders bevorzugter Ausgestaltung ist das ionische Tensid aus der Gruppe der Tenside mit der Strukturformel R-SO₃M, R-CO₃M oder R-NH₃M, wobei R ein Substituent aus der Gruppe der Alkyle, Alkene, Alkine oder Aryle ist und M ein Alkali oder ein Erdalkalimetall.

In einer alternativen Ausgestaltung der Absorberflüssigkeit ist der Zusatzstoff ein nichtionisches Tensid. Bevorzugt kommt dabei als nichtionisches Tensid ein Stoff aus der Gruppe der Tenside mit der Strukturformel R-OH oder R-O-R' zum Einsatz, wobei R,R' ein Substituent aus der Gruppe der Alkyle, Alkene, Alkine oder Aryle ist.

Vorzugsweise ist der Zusatzstoff ein amphoteres Tensid, insbesondere mit einem Carboxylat (-COO⁻) als anionische polare Gruppe und einer quartären Amoniumgruppe (R4N⁺) als kationische polare Gruppe. Amphotäre Tenside werden auch als zwitterionische Tenside bezeichnet, die Aufgrund ihrer anionischen und kationischen polaren Gruppe sowohl anionischen als auch kationischen Charakter aufweisen.

Bei der Absorberflüssigkeit sorgt der Zusatzstoff für eine gute Benetzung und das Absorptionsmittel für eine entsprechend hohe Absorption beispielsweise von Kohlendioxid aus dem Rauchgas einer Verbrennungsanlage. Deshalb ist in einer besonders bevorzugten Ausgestaltung der Absorberflüssigkeit das Absorptionsmittel eine Mischung aus einem nebeneinander vorliegenden Aminosäuresalz und einer freien Aminosäure in wässriger Lösung.

Eine besonders erfolgversprechende Klasse von Aminoverbindungen für die Absorption von Kohlendioxid sind solche Aminosäuren, die mit einer äquimolaren Menge an anorganischer Base (in der Regel Kaliumhydroxid KOH) in das entsprechende Aminosäuresalz überführt werden. Aminosäuren, genauer gesagt, Aminocarbonsäuren, sind eine Klasse von kleinen organischen Verbindungen mit mindestens einer Carboxylgruppe (-COOH) und mindestens einer Aminogruppe (-NH₂). Als Aminogruppe wird in der organischen Chemie die funktionelle Gruppe (-NH₂) der primären Amine und Aminosäuren verstanden. Die Aminogruppe ist eine basische funktionelle Gruppe, da das freie Elektronenpaar am Stickstoffatom - analog zu dem im Ammoniak-Molekül ein Proton von einer Säure aufnehmen kann. In wässriger Lösung liegen Aminosäuren als sogenannte Zwitterionen vor, d.h. die Aminogruppe ist protoniert und die Carboxylgruppe ist deprotoniert. Dabei wirkt die Aminogruppe als Base, da sie ein Proton aufnimmt, (Protonenakzeptor). Die Carboxylgruppe wirkt als Säure, da sie ein Proton abgibt, (Protonendonator). Diese besondere Eigenschaft der Aminosäuren macht sich in besonders bevorzugter Ausgestaltung auch die vorliegende Erfindung bei der Realisierung eines einerseits gut benetzenden und andererseits gut absorbierenden Absorptionsflüssigkeit mit hoher Selektivität und hoher Kapazität zunutze.

Eine freie, d.h. nicht mit Kaliumhydroxid versetzte Aminosäure, kann sowohl als Säure als auch als Base fungieren und ist pkB-Wert variabel. Bevorzugt wird hierbei ausgenutzt, dass bei Aminosäuren der pkB-Wert temperaturabhängig ist. Liegt also neben den bisher eingesetzten reinen Aminosäuresalz auch freie Aminosäure in dem Absorptionsmittel der Absorberflüssigkeit vor, so wird durch den Temperaturunterschied zwischen Absorber und Desorber eine Variation des pkB-Werts des Absorptionsmittels erreicht, wobei im kalten Absorber ein hoher pkB-Wert erreicht wird, was die Absorption begünstigt und im heißen Desorber resultiert ein niedriger pkB-Wert, wodurch für die Desorption weniger Energie aufgebracht werden muss. Durch die koexistierende Mischung von Aminosäuresalz und einer freien Aminosäure in wässriger Lösung ist eine Einstellbarkeit des pkB-Werts durch Temperaturvariation möglich, wobei der Effekt, dass bei einem exothermen Lösungsvorgang die Löslichkeit mit steigender Temperatur abnimmt, gezielt ausgenutzt wird. Die Kombination des vorteilhaften Absorptionsmittels auf der Basis eines Gemischs einer Aminosäure, die frei ist, und eines Aminosäuresalzes mit einem oberflächenaktiven Zusatzstoff, bevorzugt eines Tensides, kann ein sehr effizienter Abscheideprozess von Kohlendioxid aus dem Rauchgas einer Verbrennungsanlage erzielt werden. Mit der Erfindung wird erstmals eine Absorberflüssigkeit vorgeschlagen, die beide Randbedingungen insgesamt in Betracht zieht und eine neuartige Absorberflüssigkeit vorschlägt.

In einer weiterhin bevorzugten Ausgestaltung der Absorberflüssigkeit enthält das Absorptionsmittel in der Absorberflüssigkeit eine nicht äquimolare Mischung des Aminosäuresalzes und der freien Aminosäure. Bevorzugt ist hierbei ein Überschuss an freier Aminosäure in der Mischung gegenüber der Konzentration des Aminosäuresalzes gegeben.

In bevorzugter Ausgestaltung der Absorberflüssigkeit weist das Absorptionsmittel eine mit steigender Temperatur abnehmende Basenstärke (pkB-Wert) auf.

In einer weiterhin bevorzugten Ausgestaltung weist da Aminosäuresalz einen Substituenten auf, wobei der Substituent eine Verbindung aus der Gruppe Wasserstoff, Alkyl, Hydroxyalkyl oder Aminoalkyl ist.

Vorzugsweise weist das Aminosäuresalz einen weiteren Substituenten auf, wobei der weitere Substituent aus der Gruppe von Wasserstoff, Alkyl, Hydroxyalkyl oder Halogenalkyl entnommen ist.

Die Absorberflüssigkeit mit dem Absorptionsmittel ist in einer weiter bevorzugten Ausgestaltung **dadurch gekennzeichnet, dass** das Aminosäuresalz ein Salz eines Metalls ist, insbesondere ein Salz eines Alkalimetalls mit einem Element aus der Gruppe Kalium oder Natrium, wobei in dem Aminosäuresalz in der Carboxylgruppe der Wasserstoff durch das Metall ersetzt ist.

In einer weiter bevorzugten Ausgestaltung der Absorberflüssigkeit weist in dem Absorptionsmittel die Aminosäure weitere Substituenten auf, wobei der weitere Substituent aus der Gruppe von Wasserstoff, Alkyl, Hydroxyalkyl oder Hydrogenalkyl entnommen ist.

Die für das Absorptionsmittel verwendbaren Aminosäuren können somit in einer allgemein gültigen Form beschrieben werden. Dabei sind die oben genannten Substituenten des Aminosäuresalzes und der Aminosäure bei Zugabe einer zusätzlichen Aminosäure beim Aminosäuresalz und der freien Aminosäure nicht unbedingt identisch, d.h. in einem spezifischen Absorptionsmittel kann das Aminosäuresalz und die Aminosäure im Überschuss mit jeweils unterschiedlichen Substituenten vorliegen. Durch die Ausgestaltung des Absorptionsmittels als Gemisch aus einem Aminosäuresalz und einer freien Aminosäure, die Vorzugsweise in wässriger Lösung koexistent vorliegen, ist erstmals für die Absorberflüssigkeit ein Absorptionsmittel gegeben, was in besonders vorteilhafter Weise in einem Absorptions-Desorptionsprozess für die Abscheidung von Kohlendioxid aus dem Rauchgas einer Verbrennungsanlage eingesetzt werden kann. Hierbei ist eine besonders günstige energetische Belastung des Gesamtreinigungsprozesses im Absorptions- und Desorptionsbereich gegeben, zwar unter gleichzeitiger Erzielung einer guten Benetzbarkeit durch den Zusatzstoff zur Erhöhung der Stoffaustauschfläche in einer Kolonne. Die auf ein Verfahren zur Herstellung einer Absorptionsflüssigkeit gerichtete Aufgabe wird erfindungsgemäß dadurch gelöst, dass in wässriger Lösung durch äquimolare Zugabe einer Lauge zu einer Aminosäure die Aminosäure vollständig in ein Aminosäuresalz überführt wird und durch eine weitere Zugabe einer Aminosäure eine Mischung aus Aminosäuresalz und freier Aminosäure hergestellt wird, so dass Aminosäuresalz und freie Aminosäure koexistent vorliegen, und bei dem ein grenzflächenaktiver Zusatzstoff zur Herabsetzung der Grenzflächenspannung zwischen einer festen Oberfläche und der Flüssigkeit der Lösung zugesetzt wird.

Bevorzugt wird in dem Verfahren als grenzflächenaktiver Zusatzstoff ein Tensid der Lösung zugesetzt. Dabei sind schon geringe Konzentrationen des Zusatzstoffes in der Lösung ausreichend.

Statt die Aminosäure durch eine äquimolare Zugabe von Lauge vollständig in das Aminosäuresalz zu überführen, kann auch durch eine kleinere Zugabe an Lauge eine Mischung aus Aminosäuresalz und freier Aminosäure hergestellt werden. Eine weitere Möglichkeit ist die Zugabe einer zusätzlichen Aminosäure in eine bereits vorliegende äquimolare Mischung. Durch das Nebeneinander-Vorliegen von Aminosäuresalz und freier Aminosäure wird ein variabler pkB-Wert erzielt, der die Absorption von Kohlendioxid bei niedriger Temperatur begünstigt und die Desorption bei hoher Temperatur verbessert. Durch die Zugabe des grenzflächenaktiven Zusatzstoffs zur Herabsetzung der Grenzflächenspannung zwischen fester Oberfläche und der Flüssigkeit ist das Benetzungsverhalten gegenüber herkömmlichen Absorberflüssigkeiten deutlich erhöht, so dass ein gutes Trennverhalten beispielsweise bei der Abscheidung von Kohlendioxid aus einer mit Kohlendioxid beladenen Absorberflüssigkeit gegeben ist. Ein oberflächenaktiver Zusatzstoff kann auch bei anderen verfügbaren Absorberflüssigkeiten mit einem Absorptionsmittel verwendet werde, bei der das Absorptionsmittel etwa nicht auf Aminosäuresalz/Aminosäure basiert. Hierbei wird einfach eine wässrige Lösung angesetzt, bei der das herkömmliche Absorptionsmittel in wässriger Lösung vorliegt und der oberflächenaktive Zusatzstoff etwa ein Tensid, der Lösung in typischerweise geringen Mengen zur Herabsetzung der Oberflächenspannung zugesetzt wird.

Die auf eine Verwendung gerichtete Aufgabe der Erfindung wird gelöst durch eine Verwendung der Absorberflüssigkeit enthaltend ein Absorptionsmittel und einen grenzflächenaktiven Zusatzstoff zur Herabsetzung der Grenzflächenspannung zwischen einer festen Oberfläche und der Flüssigkeit, zur Absorption von Kohlendioxid aus einem Rauchgas einer Verbrennungsanlage.

Bei der Verwendung wird zunächst die Absorptionsflüssigkeit vorzugsweise mit kohlendioxidhaltigem Abgas in Kontakt gebracht, so dass Kohlendioxid in dem in der Absorptionsflüssigkeit vorhandenen Absorptionsmittel gelöst wird, so dass ein beladenes Absorptionsmittel gebildet wird, und bei der anschließend Kohlendioxid aus geladenem Absorptionsmittel thermisch desorbiert wird.

In einer besonders bevorzugten Ausgestaltung der Verwendung wird diese bei der Absorption von Kohlendioxid aus dem Rauchgas mittels der Absorptionsflüssigkeit bei einer niedrigeren Temperatur als die Desorption durchgeführt. Durch diese besonders vorteilhafte Ausgestaltung der Verwendung ist erreicht, dass unter Ausnutzung des temperaturabhängigen pkB-Werts des Absorptionsmittels in der Absorberflüssigkeit in dem Absorptions- bzw. Desorptionsprozess insgesamt eine besonders günstige Energiebilanz erreicht ist, so dass bei einer Integration einer Kohlendioxid-Abscheidevorrichtung in eine Kraftwerksanlage ein vergleichsweise hoher Wirkungsgrad erreichbar ist.

In weiter bevorzugter Ausgestaltung der Verwendung wird diese bei einer Absorption von Kohlendioxid aus dem Rauchgas einer fossil befeuerten Dampfkraftwerksanlage, aus dem Abgas einer Gasturbinenanlage oder aus dem Abgas einer kombinierten Gas- und Dampfturbinenanlage oder einer IGCC-Anlage angewendet.

Nachfolgend werden Ausführungsbeispiele der Erfindung anhand der beigefügten Zeichnung näher erläutert. Es zeigt:
- FIG 1: einen oberflächenaktiven Zusatzstoff auf Basis eines ionischen Tensids,
- FIG 2: ein weiteres Beispiel für einen oberflächenaktiven Zusatzstoff auf Basis eines ionischen Tensids,
- FIG 3: ein weiteres Ausführungsbeispiel für einen oberflächenaktiven Zusatzstoff auf Basis eines ionischen Tensids,
- FIG 4: ein Beispiel eines oberflächenaktiven Zusatzstoffes auf Basis eines nichtionischen Tensids,
- FIG 5: ein weiteres Beispiel eines oberflächenaktiven Zusatzstoffes auf Basis eines nichtionischen Tensids,
- FIG 6: eine schematische Darstellung einer Abscheidevorrichtung für Kohlendioxid aus dem Rauchgas einer Verbrennungsanlage.

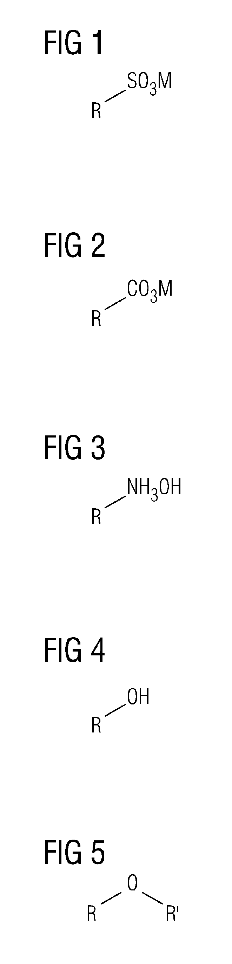

In den Figuren 1 bis 3 ist jeweils ein Beispiel einer oberflächenaktiven Substanz in chemischer Strukturschreibweise dargestellt. Die in den Figuren 1 bis 3 dargestellten Substanzen sind Beispiele ionischer Tenside. FIG 1 zeigt ein anionisches Tensid mit einer Sulfonatgruppe SO₃⁻, an die an Alkali oder Erdalkalimetall M gebunden ist. Der Substituent R ist eine Alkyl-, eine Alken-, eine Alkin- oder eine ArylGruppe. FIG 2 zeigt ein ionisches Tensid mit einer Carboxylat-Gruppe CO₃⁻ an die ein Alkali oder Erdalkalimetall M gebunden ist. FIG 3 zeigt ein ionisches Tensid mit einer Amoniumgruppe NH₃OH mit einem Substituenten R, der ein Alkyl, Alken, Alkin oder Aryl sein kann.

In den Figuren 4 und 5 ist jeweils ein Beispiel für ein nichtionisches Tensid dargestellt. FIG 4 zeigt ein Beispiel bei der an die polare OH-Gruppe ein Substituent R chemisch gebunden ist. FIG 5 zeigt ein Beispiel mit einem Sauerstoffatom, an dessen beiden freien Valenzelektronen jeweils ein Substituent R, R' angebunden ist, der aus der Gruppe von Alkyl, Alken, Alkin bzw. Aryl stammen kann.

Die oben genannten Beispiele für ionische und nichtionische Tenside sind in besonderer Weise geeignet als Zusatzstoff in einer Absorberflüssigkeit zusammen mit einem Absorptionsmittel eingesetzt zu werden.

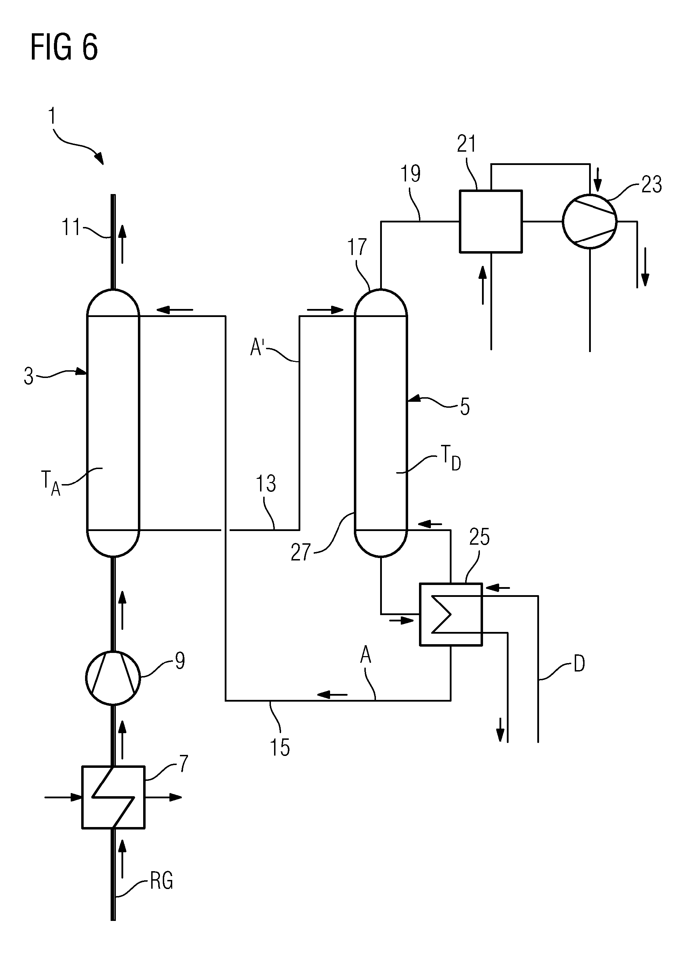

In FIG 6 ist in schematischer Darstellung ein Anlagenschaltbild einer Abscheidevorrichtung 1 dargestellt. Die Abscheidevorrichtung 1 weist eine Absorptionseinrichtung 3 und eine der Absorptionseinrichtung 3 zugeordnete Desorptionseinrichtung 5 auf. Der Desorptionseinrichtung 5 ist ein Reboiler 25 zugeordnet, dem im Betriebsfall ein Prozessdampf zur Bereitstellung von Wärme zustellbar ist. Die Desorptionseinrichtung weist einen Kopfbereich 17 des Desorbers auf, an die eine Gasleitung 19 für CO₂-reiches Gas angeschlossen ist. In die Gasleitung 19 ist ein Wärmetauscher 21 sowie ein dem Wärmetauscher 21 nachgeschaltete Verdichtereinheit 23 zur Verdichtung des Kohlendioxids bzw. des kohlendioxidreichen Gases vorgesehen. Die Absorptionseinrichtung 3 ist über eine Leitung 13 mit der Desorptionsvorrichtung 5 verbunden. Die Desorptionsvorrichtung 5 ist über eine Leitung 15 über den Reboiler 25 mit der Absorptionseinrichtung 3 verbunden. In der Desorptionsvorrichtung 5 sind nicht näher dargestellte Einbauten 27 vorgesehen. Diese Trenneinbauten 27 sind Packungen oder Füllkörper aus Metall oder Kunststoff.

Im Betrieb der Abscheidevorrichtung 1 wird Rauchgas RG aus einer fossil befeuerten Verbrennungsanlage, die in FIG 6 nicht näher dargestellt ist, zunächst in einem Rauchgaskühler 7 abgekühlt und anschließend über die Fördereinrichtung 9 der Absorptionseinrichtung 3 zugeführt. Nach dem Gegenstromprinzip wird in entgegengesetzter Richtung zu dem Rauchgasstrom RG eine regenerierte Absorptionsflüssigkeit A geführt. Die regenerierte Absorptionsflüssigkeit A wird hierbei über die Leitung 15 geführt, die den Reboiler 25 mit der Absorptionseinrichtung 3 strömungstechnisch verbindet. Auf diese Weise kann in dem Reboiler 25 regenerierte Absorptionsflüssigkeit A der Absorptionseinrichtung 3 zugeführt werden. Die Absorberflüssigkeit A weist ein Absorptionsmittel sowie einen Zusatzstoff auf, der oberflächenaktiv ist. Der Zusatzstoff ist beispielsweise ein Tensid, welches oberflächenspannungsreduzierende Eigenschaften hat und in geringen Mengen in der Absorberflüssigkeit vorliegt. Die Absorberflüssigkeit umfasst ein Absorptionsmittel welches in wässriger Lösung in einem Gemisch aus einem Aminosäuresalz und einer freien Aminosäure, vorliegt, so dass bei einer Absorptionstemperatur T_{A} in dem Absorptionsprozess eine Basizität pkB erreicht ist, so dass eine entsprechend hohe Löslichkeit des Kohlendioxids aus dem Rauchgas RG in der Absorberflüssigkeit A, respektive in dem Absorptionsmittel, erzielt ist. Durch das nebeneinander Vorliegen von Aminosäuresalz und freier Aminosäure in wässriger Lösung in der Absorberflüssigkeit A wird ein variabler pkB-Wert erzielt, der die Absorption von Kohlendioxid bei niedriger Temperatur T_{A} in der Absorptionseinrichtung 3 begünstigt und die Desorption bei hoher Temperatur T_{D} in der Desorptionsvorrichtung 5 verbessert. Hierbei wird sich der Effekt zunutze gemacht, dass bei exothermen Lösungsvorgängen die Löslichkeit mit steigender Temperatur abnimmt. Die gemäß der Erfindung für den CO₂-Abscheideprozess bereitgestellte Absorberflüssigkeit A mit dem Absorptionsmittel und dem oberflächenaktiven Zusatzstoff ist in besonderer Weise für diesen Absorptions-Desorptionsprozess konfektioniert und geeignet, so dass bei einer Integration der Abscheidevorrichtung 1 in eine Kraftwerksanlage ein hoher Wirkungsgrad erreicht ist. Die Abscheideeffizienz ist deutlich gegenüber den herkömmlichen Absorberflüssigkeiten verbessert. Das von Kohlendioxid weitgehend befreite Abgas 11 verlässt die Absorbereinrichtung 3 über einen nicht näher dargestellten Kamin.

Die den Zusatzstoff enthaltene Absorberflüssigkeit wird Trenneinbauten, wie Packungen oder Füllkörper aus Metall oder Kunststoff in der Desorptionseinrichtung 5 besser benetzen und so zu einem besseren Stoffaustausch und einer höheren Brennleistung führen. Daher kann die notwendige Höhe einer Absorptions- oder Desorptionskolonne verringert werden und somit die Investitionskosten verringert werden. Insgesamt steigt auch die Gesamteffizienz der Abscheidevorrichtung.

Durch den Absorptionsprozess mit der Absorberflüssigkeit A in der Absorptionseinrichtung 3 wird die Absorberflüssigkeit A, respektive das Absorptionsmittel, mit Kohlendioxid beladen, so dass eine beladene Absorberflüssigkeit A' gebildet ist. Die beladene Absorberflüssigkeit A' wird über die Leitung 13 von der Absorptionseinrichtung 3 zu der Desorptionseinrichtung 5 geleitet wo die mit Kohlendioxid beladene Absorberflüssigkeit A' wieder von Kohlendioxid befreit wird. Dabei wird das Kohlendioxid thermisch aus der Absorberflüssigkeit A' ausgetrieben. Aufgrund der guten und deutlich verbesserten Benetzung der Einbauten 27 der Desorptionseinrichtung 3 durch die beladene Absorberflüssigkeit A' ist eine größere Stoffaustauschoberfläche geschaffen und damit eine verbesserte Trennwirkung gegenüber herkömmlichen Absorberflüssigkeiten. Die Desorption in der Desorptionseinrichtung 3 wird üblicherweise durch thermisches Austreiben des Kohlendioxids CO₂ aus der Absorberflüssigkeit A' durchgeführt. Im Kopfbereich 17 der Desorptionseinrichtung 3 wird über die Gasleitung 19 kohlendioxidreiches Gas aus der Desorptionseinrichtung 3 abgeleitet. Das kohlendioxidreiche Gas durchströmt zunächst den Wärmetauscher 21 sowie den sich an den Wärmetauscher 21 anschließenden Verdichter 23. Das so abgeschiedene Kohlendioxid CO₂ wird in dem Verdichter 23 verdichtet und für weitere Zwecke verwendet, z.B. Injektion in einer Aquifere oder einem anderweitigem CO₂-Speicher. Der Desorptionsprozess in der Desorptionseinrichtung 3 erfolgt bei einer Desorptionstemperatur T_{D}, die höher ist als die Absorptionstemperatur T_{A}. Mit der Absorberflüssigkeit A gemäß der Erfindung ist einerseits ein variabler pkB-Wert erzielt, der mit der Temperatur des Prozesses variiert, so dass der pkB-Wert im Bereich der Absorption höher ist als im Bereich der Desorption. Auf diese Weise wird die Absorption begünstigt und im heißeren Desorber resultiert ein niedrigerer pkB-Wert, wodurch für die Desorption weniger Desorptionsenergie aufgebracht werden muss. Das thermische Austreiben des Kohlendioxids aus der beladenen Absorberflüssigkeit A' kann daher unter deutlich geringerem Energieeinsatz erfolgen. Hinzu kommt, dass durch die Wirkung des Zusatzstoffs, beispielsweise des Tensids, in der Absorberflüssigkeit A eine Netzmittelwirkung erzielt ist, die zu einer hohen Benetzung und damit zu einem guten Stoffaustausch und Trennwirkung führt.

In besonderer Weise ist die gezeigte Abscheidevorrichtung 1 unter Verwendung erfindungsgemäßen Absorberflüssigkeit A geeignet, in einer Kraftwerksanlage z.B. einer Dampfkraftwerksanlage, einer Gasturbinenanlage, einer kombinierten Gas- und Dampfturbinenanlage, oder in einer Gas- und Dampfturbinenanlage mit integrierter Kohlevergasung zur Abtrennung von Kohlendioxid eingesetzt zu werden. Auf dem Weg zur Entwicklung eines CO₂-freien Kraftwerks zeigt die Erfindung hier durch die Wahl der Absorberflüssigkeit und die spezifische Komposition der Absorberflüssigkeit A mit einem Absorptionsmittel und einem oberflächenaktiven Zusatzstoff einen Weg auf, wie der Absorptions-Desorptionsprozess in einer besonders effizienten Weise in einen bestehenden Kraftwerksprozess integriert werden kann. Dies ist auch besonders vorteilhaft im Hinblick auf Kraftwerksmodernisierungen und Umrüstungen, bei denen eine konventionelle Kraftwerksanlage, die mit CO₂-Emissionen behaftet ist, durch den zusätzlichen Einbau einer Abscheidevorrichtung 1 für Kohlendioxid besonders klimafreundlich ausgerüstet bzw. umgerüstet werden kann.

## Patentansprüche

1. Absorberflüssigkeit, insbesondere für die selektive Absorption von Kohlendioxid aus dem Rauchgas einer Verbrennungsanlage, enthaltend ein Absorptionsmittel und einen grenzflächenaktiven Zusatzstoff zur Herabsetzung der Grenzflächenspannung zwischen einer festen Oberfläche und der Flüssigkeit.

2. Absorberflüssigkeit nach Anspruch 1,
bei der der Zusatzstoff in seiner chemischen Struktur einen hydrophoben Kohlenwasserstoffrest und einen hydrophilen Molekülteil aufweist, so dass die Grenzflächenspannung zwischen fester und flüssiger Phase herabgesetzt ist.

3. Absorberflüssigkeit nach Anspruch 2,
bei der der Zusatzstoff eine Substanz aus der Gruppe der Tenside ist, mit der die Flüssigkeit versetzt ist.

4. Absorberflüssigkeit nach Anspruch 3,
bei der der Zusatzstoff ein ionisches Tensid ist, insbesondere ein anionisches oder ein kationisches Tensid.

5. Absorberflüssigkeit nach Anspruch 4,
bei der das ionische Tensid aus der Gruppe der Tenside mit der Strukturformel R-SO₃M, R-CO₃M oder R-NH₃M ist, wobei (R) ein Substituent aus der Gruppe der Alkyle, Alkene, Alkine oder Aryle ist und M ein Alkali- oder ein Erdalkalimetall.

6. Absorberflüssigkeit nach Anspruch 3,
bei der der Zusatzstoff ein nichtionisches Tensid ist.

7. Absorberflüssigkeit nach Anspruch 6,
bei der das nichtionische Tensid aus der Gruppe der Tenside mit der Strukturformel R-OH oder R-O-R' ist, wobei (R, R') ein Substituent aus der Gruppe der Alkyle, Alkene, Alkine oder Aryle ist.

8. Absorberflüssigkeit nach Anspruch 3,
bei der der Zusatzstoff ein amphoteres Tensid ist, insbesondere mit einem Carbocylat (-COO⁻) als anionische polare Gruppe und einer quartären Ammoniumgruppe (R4N⁺) als kationische polare Gruppe.

9. Absorberflüssigkeit nach einem der vorhergehenden Ansprüche, bei der das Absorptionsmittel eine Mischung aus einem nebeneinander vorliegenden Aminosäuresalz und einer freien Aminosäure enthält.

10. Absorberflüssigkeit nach Anspruch 9,
**gekennzeichnet durch** eine nicht-äquimolare Mischung des Aminosäuresalzes und der freien Aminosäure.

11. Absorberflüssigkeit nach Anspruch 9 oder 10, **gekennzeichnet durch** einen Überschuss an freier Aminosäure in der Mischung.

12. Absorberflüssigkeit nach einem der Ansprüche 9, 10 oder 11,
**gekennzeichnet durch** eine mit steigender Temperatur abnehmende Basenstärke (pkB) der Lösung.

13. Absorberflüssigkeit nach einem der Ansprüche 9 bis 12, **dadurch gekennzeichnet, dass** das Aminosäuresalz einen Substituenten (R) aufweist, wobei der Substituent (R) eine Verbindung aus der Gruppe der Wasserstoff, Alkyl, Hydroxyalkyl oder Aminoalkyl ist.

14. Absorberflüssigkeit nach einem der Ansprüche 9 bis 13, **dadurch gekennzeichnet, dass** das Aminosäuresalz weitere Substituenten (R1, R2) aufweist, wobei der weitere Substituent (R1, R2) aus der Gruppe von Wasserstoff, Alkyl, Hydroxyalkyl oder Halogenalkyl entnommen ist.

15. Absorberflüssigkeit nach einem der Ansprüche 9 bis 14,
**dadurch gekennzeichnet, dass** das Aminosäuresalz ein Salz eines Metalls (M) ist, insbesondere ein Salz eines Alkalimetalls mit einem Element aus der Gruppe Kalium oder Natrium, wobei in dem Aminosäuresalz in der Carboxylgruppe der Wasserstoff (H) durch das Metall (M) ersetzt ist.

16. Absorberflüssigkeit nach einem der Ansprüche 9 bis 15, **dadurch gekennzeichnet, dass** die freie Aminosäure einen Substituenten (R) aufweist, wobei der Substituent (R) eine Verbindung aus der Gruppe der Wasserstoff, Alkyl, Hydroxyalkyl oder Aminoalkyl ist.

17. Absorberflüssigkeit nach einem der Ansprüche 9 bis 16, **dadurch gekennzeichnet, dass** die freie Aminosäure weitere Substituenten (R1, R2) aufweist, wobei der weitere Substituent (R1, R2) aus der Gruppe von Wasserstoff, Alkyl, Hydroxyalkyl oder Halogenalkyl entnommen ist.

18. Verfahren zur Herstellung einer Absorberflüssigkeit, insbesondere einer Absorberflüssigkeit zur selektiven Absorption von Kohlendioxid aus einem Rauchgas einer Verbrennungsanlage, bei dem in wässriger Lösung
(a) Aminosäure durch äquimolare Zugabe einer Lauge vollständig in ein Aminosäuresalz überführt wird,
(b) durch weitere Zugabe einer Aminosäure eine Mischung aus Aminosäuresalz und freier Aminosäure hergestellt wird, so dass Aminosäuresalz und freie Aminosäure koexistent vorliegen, und bei dem
(c) ein grenzflächenaktiver Zusatzstoff zur Herabsetzung der Grenzflächenspannung zwischen einer festen Oberfläche und der Flüssigkeit der Lösung zugesetzt wird.

19. Verfahren nach Anspruch 18,
**dadurch gekennzeichnet, dass** als grenzflächenaktiven Zusatzstoff ein Tensid zugesetzt wird.

20. Verfahren nach Anspruch 19,
**dadurch gekennzeichnet, dass** das Tensid in geringer Menge zugesetzt wird.

21. Verwendung einer Absorberflüssigkeit nach einem der Ansprüche 1 bis 17, zur Absorption von Kohlendioxid aus einem Rauchgas einer Verbrennungsanlage.

22. Verwendung nach Anspruch 21,
bei der das Absorberflüssigkeit zunächst mit kohlendioxidhaltigem Abgas in Kontakt gebracht wird, so dass Kohlendioxid in dem Absorberflüssigkeit gelöst wird, so dass beladenes Absorberflüssigkeit gebildet wird, und bei der anschließend Kohlendioxid aus beladenem Absorberflüssigkeit thermisch desorbiert wird.

23. Verwendung nach Anspruch 20, 21 oder 21,
bei der die Absorption von Kohlendioxid aus dem Rauchgas mit der Absorberflüssigkeit bei einer niedrigeren Temperatur durchgeführt wird als die Desorption.

24. Verwendung nach einem der Ansprüche 20 bis 23, **gekennzeichnet durch** eine Absorption von Kohlendioxid aus dem Rauchgas eines fossilbefeuerten Dampfkraftwerks, aus dem Abgas einer Gasturbinenanlage oder dem Abgas einer kombinierten Gas- und Dampfturbinenanlage oder einer IGCC-Anlage.
